# EUROPEAN PATENT SPECIFICATION

(11) **EP 3 613 909 B1**
(45) Date of publication and mention of the grant of the patent: **06.04.2022**
(21) Application number: 19203168.0
(22) Date of filing: 23.02.2016
(51) Int. Cl.: E03F 7/06

(54) **IMPROVED ANTI-VERMIN BARRIER**
VERBESSERTE BARRIERE GEGEN SCHÄDLINGE
BARRIÈRE ANTI-VERMINE AMÉLIORÉE

(30) Priority: 23.02.2015 GB 201502942
(43) Date of publication of application: 26.02.2020
(62) Divisional of application: 16710280.5
(73) Proprietor: McAlpine & Co Limited, Glasgow, Strathclyde G52 4LF (GB)
(72) Inventor: MCALPINE, James Edward, Glasgow, G52 4LF (GB)
(74) Representative: Creation IP Ltd

(56) References cited:
- EP-A2- 2 119 351
- DE-A1-102007 044 241
- DE-B- 1 245 873
- DE-U1- 29 521 365
- DE-U1- 29 521 365
- JP-U- S49 127 363

## Description

### Field of the Invention

The present invention belongs to the technical field of vermin control. Particular embodiments of the present invention find application in the construction industry, more specifically in the provision of drainage and sewerage installations.

### Background to the Invention

Vermin, such as rodents and more particularly rats and mice, are animals that are disease carriers as well as being repulsive to many people. A number of devices have been conceived to avoid rodent access to habitable spaces. For example grids, fences, etc. A singular problem is encountered in drainage and sewerage installations, where there has to be a flow path substantially free of obstacles where solids entrained in the drainage flow can become trapped and form a plug. To solve the problem of both keeping a free flow path and prevent rodent intrusion, anti-rodent barriers have been developed that can be installed in drain and sewer lines. A common technique used in such anti-rodent barriers is the provision of a hinged plastic flap that is placed covering the flow path and can only be opened in one way, such that rodents cannot pass through it upstream but the flap opens and offers no resistance to downstream flow.

Examples of such rodent barriers are described in EP 2385179, GB2491633 and DE563611.

EP 2385179 describes an example of a rodent guard for installation in a circular pipe opening. The rodent guard includes a flexible shield and two barriers pivotably suspended from the shield. The barriers are arranged close to each other, and each barrier includes a blade and a mounting member that projects from the blade. Each mounting member facilitates pivotal mounting of the barriers in the shield.

GB2491633 describes a rodent guard that can be placed inside a sewer pipe to prevent the free movement of rats. The device includes a curved hollow body, a curved hinged flap, which is connected to the body via a hinge. The arrangement is configured to allow unimpeded flow of liquid & solid waste downstream inside the pipe whilst preventing movement of rats upstream.

DE563611 describes a barrier to be arranged in a sewer pipe to prevent rats moving upstream in a sewer pipe. The barrier includes two flaps that are arranged to rotate about a common axis. One of the flaps provides a counterweight flap which is articulated about half-way up the first flap. This arrangement creates a locking device.

These anti-rodent barriers present the problem that rodents instinctively gnaw on the plastic flap and eventually gain access through the barrier over time.

Further examples of barrier flap arrangements are presented in DE 295 21 365 U1, EP 2 119 351, JP S49 127363 U, DE 10 2007 044241 and DE 12 45 873.

DE 295 21 365 U1 describes a device including a sleeve and a safety flap for preventing the penetration of vermin, especially rats in toilet bowls.

EP 2 119 351 describes an electronic pest deterrent, where the device includes a shield made of a plurality of suspended electrical leads.

JP S49 127363 U describes a device including a sleeve and a safety flap which includes barbs extending from a face of a barrier flap.

DE 10 2007 044241 describes a cover flap including a mesh material welded on its perimeter to a ring. The mesh material is permeable to water but impermeable for animals.

DE 12 45 873 describes a device for shutting off a sewage line against the penetration of rats. The device includes a shut-off valve shaped to conform to the cross section of the sewage line.

### Summary of the Invention

The present invention provides an apparatus for preventing vermin access to buildings through drainage conduits having the features of claim 1.

In order to clarify the ambit of the invention, the barrier member is movable between one closed position and one open position, that means it is only movable between two extreme points, one in which the barrier member closes the flow path and one in which the barrier member opens the flow path. This means that movement towards any position other than those between these two extreme points is not possible, or in shorter terms, the barrier member opens in one-way only.

By providing a protective structure to the barrier member, gnawing a hole through the barrier member by vermin is prevented and therefore they cannot gain access beyond the barrier member. Additionally the protected barrier member is light enough so that the barrier member can maintain its closed position despite its own weight, when the apparatus is installed in an inclined or vertical position and the threshold force is small enough so that the barrier member can be moved to a flow path open position by a small liquid discharge when the barrier member is in a substantially horizontal position.

The matrix encompasses substantially the whole surface area of the barrier member whereas the protective structure comprises gaps or holes so that the barrier member weight can be minimised in order to reduce the threshold force as much as possible while maintaining the impenetrability of the barrier member.

The protective structure may comprise a plurality of intersecting formations integrated in the barrier member.

The protective structure may comprise a vermin deterrent substance. In at least one embodiment of the present invention a protective structure comprises a substance that deters vermin from approaching the barrier by releasing the deterrent substance into the surrounding atmosphere. In another embodiment, the protective structure comprises a deterrent substance that tastes unpleasant to vermin and causes vermin to cease and desist gnawing on the barrier.

The protective structure comprises mesh structure. This mesh structure can provide impenetrability to the whole barrier without adding excessive weight to it.

The mesh structure is at least partially embedded in the matrix and therefore does not need additional attachments means to attach it to the barrier.

The protective structure may comprise a mesh of a tougher material than the matrix. In at least one embodiment of the present invention by providing a mesh of a tougher material than the matrix, vermin gnawing on the barrier get confused and deterred from further gnawing on the barrier.

The mesh structure may comprise a metallic mesh. In at least one embodiment of the present invention a metallic mesh is a low cost protective structure that can be easily incorporated into a matrix and prevent vermin gnawing through it.

The mesh structure may comprise a high-strength fibre mesh. In at least one embodiment of the present invention a high-strength fibre mesh can also confer impenetrability to the barrier against vermin gnawing.

The high-strength fibre mesh may comprise a nylon mesh.

The barrier member may be hinged to the duct. In at least one embodiment of the present invention hinging the barrier member to the duct is an easy and convenient way to enable movement of the barrier member between a flow path closed and a flow path open position.

The barrier member may comprise a thin element. Thin members are suitable because they have large areas and small thicknesses so that their weight per unit area is small and therefore the threshold force to keep the/each barrier member in a closed position is small.

The barrier member may comprise a curved flap. Curved flaps are suitable for opening and closing the flow path from within the duct.

The barrier member may define an area larger than the cross-sectional area of an adjacent section of the duct. In at least one embodiment of the present invention by providing a barrier that encompasses an area larger than the cross-sectional area of an adjacent section of the duct, the flow path can be closed when the barrier is moved and pressed towards the adjacent duct section of smaller cross-sectional area and the flow path can be opened when the barrier member moves away from the adjacent section of smaller cross-sectional area.

The barrier member may sealingly engage the duct when the barrier member is in the flow path closed position. In at least one embodiment of the present invention when the barrier sealingly engages the duct in the closed position, the apparatus can also prevent odours from migrating towards the interior of buildings.

The barrier member may comprise a soft elastic edge. In at least one embodiment of the present invention a barrier member with a soft elastic edge sealingly engages with ease the duct walls.

The biasing element may comprise a spring. The spring imparts the threshold force upon the barrier member to maintain the flow path closed when there is no force acting on the barrier member, apart from its weight.

The duct may comprise sections with different internal cross-sectional areas.

The duct may comprise internal formations to prevent the barrier member to open in an undesired direction. In at least one embodiment of the present invention a duct with different internal cross-sectional areas and/or formations provides kinks or edges that prevent the barrier to open in an undesired direction and thus prevents vermin access to the drainage conduit beyond the point where the barrier is located.

The duct may comprise a section with a smooth interior adjacent to the barrier member to prevent an easy approach of vermin to the barrier member when the apparatus is inclined or in a vertical position. In at least one embodiment of the present invention a smooth interior facilitates that vermin slide and find difficulty in supporting themselves in position for gnawing the barrier member.

### Brief Description of the Drawings

The present invention will be more clearly explained in the following paragraphs in which embodiments and features of the prior art and the present invention will be described with reference to the following drawings, in which:
Figure 1 represents an anti-vermin barrier typically encountered in the prior art in a flow path open position.
Figures 2a and 2b represent an anti-vermin barrier typically encountered in the prior art in a flow path closed position.
Figure 3 shows an example, which is not an embodiment of the present invention, of a barrier comprising spiky formations.
Figure 4 shows an example, which is not an embodiment of the present invention, in which the barrier is electrified.
Figure 5 shows a barrier according to an embodiment of the present invention, in which the barrier comprises a protective metallic mesh.

### Detailed Description of the Drawings

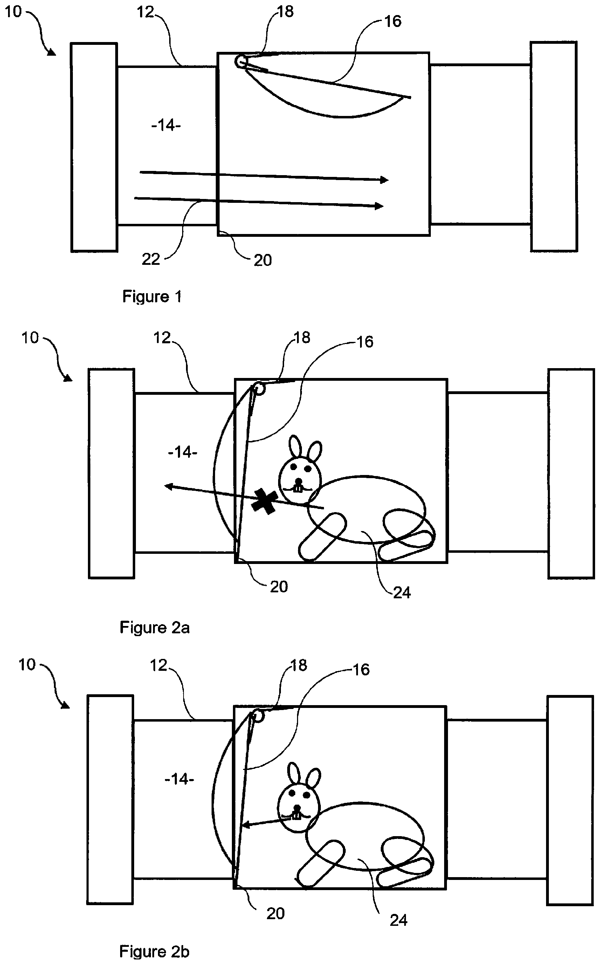

Figure 1 shows an apparatus for preventing rodent access through a drain pipeline, indicated generally by reference numeral 10. The apparatus 10 comprises a duct 12 which defines a flow path 14. The apparatus further comprises a barrier 16 which is movable between a flow path open position and a flow path closed position, which is shown in Figure 1.

The apparatus 10 comprises a biasing element 18 which keeps the barrier in a closed position by pressing the barrier against a step 20 in the duct 12 adjacent to the barrier 16, in the absence of any force acting on it, except its own weight. The barrier 16 is hinged onto the duct wall on one side of the barrier.

Figure 1 shows a drain stream 22 that circulates thought the duct 12 and moves the barrier into a flow path open position.

Figure 2a shows the same apparatus of Figure 1, but this time the barrier 16 is in a flow path closed position, because there is not force acting on it. A rodent 24 has crawled into the draining system and now faces the barrier 16, which prevents its further access into the draining system.

Figure 2b shows is meant to indicate that the rodent 24 instinctively will try to gain further access, either because it senses warmth, light or pleasant smells coming from upstream, by gnawing the barrier. The rodent 24 may try several times, even on different days and upon persistent gnawing could finally create a hole through the barrier.

A hole in the barrier 16 presents problems irrespective of the size of the hole, because a liquid discharge with entrained solids could potentially not open the barrier 16, because the liquids can drain through the hole and leave the solids upstream of the barrier. This is highly undesirable, as it can create a clog and/or a point where bad smells are produced.

Additionally, the rodent 24 can eventually gain access through the barrier 16 if the hole is large enough, which is also to be avoided.

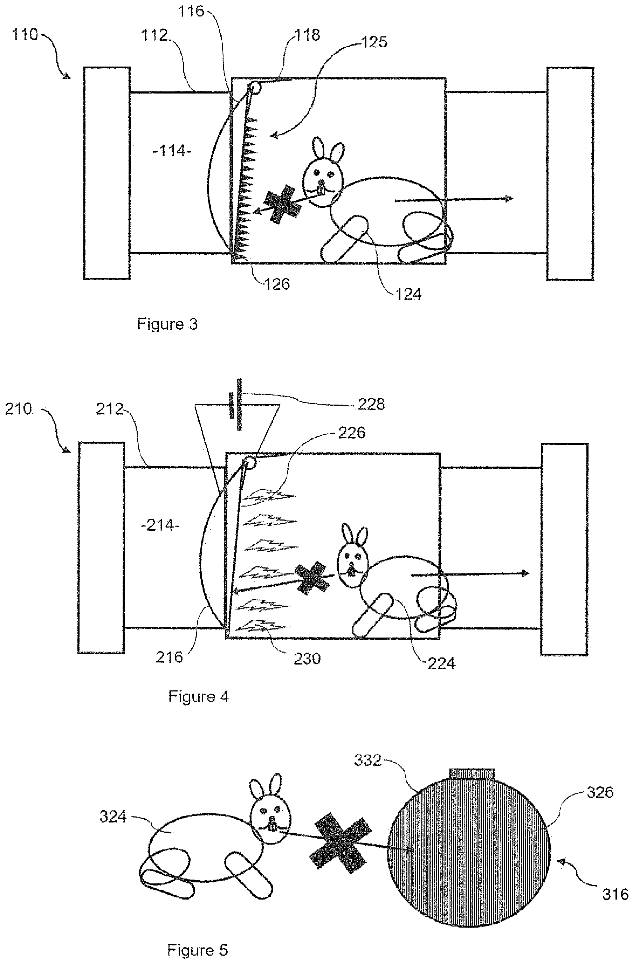

Figure 3 shows an apparatus 110, which is similar to apparatus 10 and similar features are indicated with like numerals incremented by 100. Figure 3 does not represent an embodiment of the present invention. The barrier 116 of apparatus 110 further comprises a protective structure 165 to deter vermin gnawing the barrier 116 through. In this embodiment, the protective structure 165 comprises an array of spiky formations 166 distributed on the barrier 116 surface, so that when
any animal tries to approach the barrier, it gets pricked and causes it to desist in gnawing the barrier through and/or going further upstream, thus protecting and maintaining the integrity of the barrier 116. It will be noticed that the spiky formations 166 can be made of a light material, such as plastic, provided that the spikes are sharp enough to prickle vermin approaching the barrier 116.

Figure 4 shows an apparatus 210, which is similar to apparatus 10 and similar features are indicated with like numerals incremented by 200. Figure 4 does not represent an embodiment of the present invention. The barrier 216 of apparatus 210 comprises a layer of a conductor material 226 connected to an electrical current source 228, so that the barrier 216 is electrified, as indicated by small lightning symbols 230. In this case, any animal trying to access the interior of a building through the drains, upon contact of the barrier 216, senses small electrical shocks which causes vermin to desist in gnawing the barrier through and/or attempt to go beyond that point, therefore protecting and maintaining the integrity of the barrier.

Figure 5 shows a barrier 316, which comprises a protective metallic mesh 326 embedded in a polymeric matrix 332. Any animal that tries to gnaw the barrier 316 through, will feel the toughness of the metallic mesh 326 and this discourages any animal from further gnawing, perhaps by pain infringed by gnawing in such a hard element, thus protecting the integrity of the barrier 316.

It is hereby emphasized that is it is important for the invention to work also when the embodiments are installed in an inclined and vertical position and therefore, the barrier weight must be kept as light as possible, so that it can be biased in a closed position when installed vertically without using an excessive threshold force, because when installed horizontally the threshold force needs to be as small as possible, so that the barrier opens the flow path with the smallest of discharges.

It is also to be highlighted that it is not necessary to hinge the barrier onto the duct because embodiments without hinges, similar to one-way check valves, are understood to fall within the scope of the invention, although not described herein.

Materials and dimensions can also be very different in different embodiments of the invention and are therefore not detailed herein because a person of ordinary skill would be able to build suitable embodiments without having this information detailed.

## Claims

1. An apparatus (10) for preventing vermin access to buildings through drainage conduits, the apparatus comprising:
a duct (12) defining a flow path (14), and
a barrier member (316) comprising a flap, operable to open and close the flow path (14); and
at least one biasing element (18);
wherein the barrier member (316) is movable between a flow path closed position in which the flow path (14) is substantially closed and a flow path open position in which the flow path (14) is substantially open, the barrier member (316) being biased to the flow path closed position by a threshold force, wherein the biasing element (18) is operable to impart the threshold force upon the barrier member (316) to maintain the flow path closed position when there is no force acting on the barrier member (316); and
wherein the barrier member (316) is movable to the flow path open position upon application of a force greater than the threshold force and the threshold force being sufficient to maintain the barrier member (316) in the flow path closed position, wherein the barrier member (316) comprises a matrix (332) which encompasses substantially the whole surface area of the barrier member (316),
**characterised in that**:
the barrier member (316) additionally comprises a protective structure (326) at least partially embedded in the matrix (332), wherein the protective structure (326) is operable to deter vermin gnawing through the barrier member (316) wherein the protective structure comprises a mesh (326) comprising a plurality of gaps or holes such that barrier member weight can be minimised.

2. An apparatus as claimed in claim 1, wherein the protective structure comprises a metallic mesh (326).

3. An apparatus as claimed in any preceding claim, wherein the protective structure comprises a vermin deterrent substance comprising:
an aroma which is unpleasant to vermin and is operable to deter vermin from approaching the barrier member (316), wherein the aroma is released into surrounding atmosphere.

4. An apparatus as claimed in any preceding claim, wherein the protective structure comprises a vermin deterrent substance comprising:
a taste, which is unpleasant to vermin thereby deterring vermin from gnawing the barrier member (316).

5. An apparatus as claimed in claim 2, wherein the matrix (332) comprises a polymeric matrix and the metallic mesh (326) comprises a tougher material than the polymeric matrix (332).

6. An apparatus as claimed in any preceding claim, wherein the barrier member (316) is hinged to the duct (12).

7. An apparatus as claimed in any preceding claim, wherein the barrier member (316) comprises a curved flap.

8. An apparatus as claimed in any preceding claim, wherein the duct (12) comprises sections with different internal cross-sectional areas and wherein the barrier member (316) defines an area larger than the cross-sectional area of an adjacent section of the duct.

9. An apparatus as claimed in any preceding claim, wherein the barrier member (316) comprises a soft elastic edge operable, in use to seal against duct walls.

10. An apparatus as claimed in any preceding claim, wherein the biasing element (18) comprises a spring.

## Patentansprüche

1. Einrichtung (10) zum Verhindern des Zugangs von Schädlingen zu Gebäuden durch Abflussleitungen, wobei die Einrichtung umfasst:
einen Kanal (12), der einen Strömungsweg (14) definiert, und
ein Barriereelement (316), das eine Klappe umfasst, die betreibbar ist, um den Strömungsweg (14) zu öffnen und zu schließen; und
mindestens ein Vorspannelement (18);
wobei das Barriereelement (316) zwischen einer Strömungsweg-Schließstellung, in welcher der Strömungsweg (14) im Wesentlichen geschlossen ist, und einer Strömungsweg-Offenstellung, in welcher der Strömungsweg (14) im Wesentlichen offen ist, bewegbar ist, wobei das Barriereelement (316) durch eine Schwellenkraft in die Strömungsweg-Schließstellung vorgespannt ist, wobei das Vorspannelement (18) betreibbar ist, die Schwellenkraft auf das Barriereelement (316) auszuüben, um die Strömungsweg-Schließstellung zu halten, wenn keine Kraft auf das Barriereelement (316) wirkt; und
wobei das Barriereelement (316) bei Anwendung einer Kraft, die größer als die Schwellenkraft ist, in die Strömungsweg-Offenstellung bewegbar ist und die Schwellenkraft ausreicht, um das Barriereelement (316) in der Strömungsweg-Schließstellung zu halten, wobei das Barriereelement (316) eine Matrix (332) umfasst, die im Wesentlichen den gesamten Oberflächenbereich des Barriereelements (316) umfasst,
**dadurch gekennzeichnet, dass**:
das Barriereelement (316) zusätzlich eine Schutzstruktur (326) umfasst, die zumindest teilweise in die Matrix (332) eingebettet ist, wobei die Schutzstruktur (326) betreibbar ist, Schädlinge davon abzuhalten, durch das Barriereelement (316) zu nagen, wobei die Schutzstruktur ein Gitter (326) umfasst, das eine Vielzahl von Lücken oder Bohrungen umfasst, sodass das Gewicht des Barriereelements minimiert werden kann.

2. Einrichtung nach Anspruch 1, wobei die Schutzstruktur ein Metallgitter (326) umfasst.

3. Einrichtung nach einem vorstehenden Anspruch, wobei die Schutzstruktur eine schädlingsabschreckende Substanz umfasst:
einen Duft, der für Schädlinge unangenehm und betreibbar ist, Schädlinge davon abzuhalten, sich dem Barriereelement (316) zu nähern, wobei der Duft in die umgebende Atmosphäre abgegeben wird.

4. Einrichtung nach einem vorstehenden Anspruch, wobei die Schutzstruktur eine schädlingsabschreckende Substanz umfasst:
einen Geschmack, der für Schädlinge unangenehm ist und sie davon abhält, das Barriereelement (316) anzunagen.

5. Einrichtung nach Anspruch 2, wobei die Matrix (332) eine polymere Matrix umfasst und das Metallgitter (326) ein zäheres Material als die polymere Matrix (332) umfasst.

6. Einrichtung nach einem vorstehenden Anspruch, wobei das Barriereelement (316) an dem Kanal (12) angelenkt ist.

7. Einrichtung nach einem vorstehenden Anspruch, wobei das Barriereelement (316) eine Wölbklappe umfasst.

8. Einrichtung nach einem vorstehenden Anspruch, wobei der Kanal (12) Bereiche mit unterschiedlichen inneren Querschnittsflächen umfasst und wobei das Sperrelement (316) eine Fläche definiert, die größer ist als die Querschnittsfläche eines angrenzenden Bereichs des Kanals.

9. Einrichtung nach einem vorstehenden Anspruch, wobei das Sperrelement (316) eine weichelastische Kante umfasst, die bei Verwendung zur Abdichtung gegen Kanalwände betreibbar ist.

10. Einrichtung nach einem vorstehenden Anspruch, wobei das Vorspannelement (18) eine Feder umfasst.

## Revendications

1. Appareil (10) pour empêcher l'accès d'animaux nuisibles à des bâtiments par l'intermédiaire de conduites de drainage, l'appareil comprenant :
un conduit (12) définissant un trajet d'écoulement (14), et
un élément formant barrière (316) comprenant un rabat, pouvant fonctionner pour ouvrir et fermer le trajet d'écoulement (14) ; et
au moins un élément de sollicitation (18) ;
dans lequel l'élément formant barrière (316) est mobile entre une position fermée de trajet d'écoulement dans laquelle le trajet d'écoulement (14) est sensiblement fermé et une position ouverte de trajet d'écoulement dans laquelle le trajet d'écoulement (14) est sensiblement ouvert, l'élément formant barrière (316) étant sollicité jusqu'à la position fermée de trajet d'écoulement par une force de seuil, dans lequel l'élément de sollicitation (18) peut fonctionner pour transmettre la force de seuil sur l'élément formant barrière (316) pour maintenir la position fermée de trajet d'écoulement lorsqu'il n'y a aucune force agissant sur l'élément formant barrière (316) ; et
dans lequel l'élément formant barrière (316) est mobile jusqu'à la position ouverte de trajet d'écoulement lors de l'application d'une force supérieure à la force de seuil et la force de seuil étant suffisante pour maintenir l'élément formant barrière (316) dans la position fermée de trajet d'écoulement, dans lequel l'élément formant barrière (316) comprend une matrice (332) qui englobe sensiblement toute la surface de l'élément formant barrière (316),
**caractérisé en ce que** :
l'élément formant barrière (316) comprend en plus une structure de protection (326) au moins partiellement incorporée dans la matrice (332), dans lequel la structure de protection (326) peut fonctionner pour dissuader des animaux nuisibles de ronger à travers l'élément formant barrière (316) dans lequel la structure de protection comprend un maillage (326) comprenant une pluralité d'interstices ou de trous de sorte que le poids de l'élément formant barrière puisse être minimisé.

2. Appareil selon la revendication 1, dans lequel la structure de protection comprend un maillage métallique (326).

3. Appareil selon une quelconque revendication précédente, dans lequel la structure de protection comprend une substance dissuasive d'animaux nuisibles comprenant :
un arôme qui est désagréable pour les animaux nuisibles et peut fonctionner pour dissuader les animaux nuisibles d'approcher de l'élément formant barrière (316), dans lequel l'arôme est libéré dans l'atmosphère environnante.

4. Appareil selon une quelconque revendication précédente, dans lequel la structure de protection comprend une substance dissuasive d'animaux nuisibles comprenant :
un goût, qui est désagréable pour les animaux nuisibles, dissuadant ainsi les animaux nuisibles de ronger l'élément formant barrière (316).

5. Appareil selon la revendication 2, dans lequel la matrice (332) comprend une matrice polymère et le maillage métallique (326) comprend un matériau plus dur que la matrice polymère (332).

6. Appareil selon une quelconque revendication précédente, dans lequel l'élément formant barrière (316) est articulé sur le conduit (12).

7. Appareil selon une quelconque revendication précédente, dans lequel l'élément formant barrière (316) comprend un rabat incurvé.

8. Appareil selon une quelconque revendication précédente, dans lequel le conduit (12) comprend des sections avec différentes sections transversales internes et dans lequel l'élément formant barrière (316) définit une zone plus grande que la section transversale d'une section adjacente du conduit.

9. Appareil selon une quelconque revendication précédente, dans lequel l'élément formant barrière (316) comprend un bord élastique doux pouvant fonctionner, en utilisation, pour fermer hermétiquement les parois de conduit.

10. Appareil selon une quelconque revendication précédente, dans lequel l'élément de sollicitation (18) comprend un ressort.
